# EUROPEAN PATENT APPLICATION

(11) **EP 2 582 057 A2**
(43) Date of publication of application: **17.04.2013**
(21) Application number: 12187798.9
(22) Date of filing: 09.10.2012
(51) Int. Cl.: H04B 1/04, H04B 1/18

(54) **Apparatus and method for matching antenna in wireless terminal**

(30) Priority: 10.10.2011 KR 20110103026
(71) Applicant: Samsung Electronics Co., Ltd, Gyeonggi-do 443-742 (KR)
(72) Inventor: Lee, Jun-Hui, 443-742 Gyeonggi-do (KR); Shin, Yong-Joo, 443-742 Gyeonggi-do (KR); Sa, Kong-Min, 443-742 Gyeonggi-do (KR); Won, Young-Deuk, 443-742 Gyeonggi-do (KR); Yun, Ji-Yeon, 443-742 Gyeonggi-do (KR)
(74) Representative: Hutter, Jacobus Johannes

(57) **Abstract**

Disclosed are apparatus and method for matching an antenna in a wireless terminal, which are tailored for easy control of impedance matching. A controller is configured to generate state information corresponding to states of the wireless terminal, and providing the state information to a Field Programmable Gate Array (FPGA) unit. The FPGA unit outputs an optimal Tunable Matching Network (TMN) adjustment value corresponding to the state information of the wireless terminal. State information may include operating bands / protocols and modes discerning particular environmental conditions impacting electric fields, such as a hand-held condition.

## Description

### BACKGROUND

### Technical Field

This disclosure generally to wireless communication terminals, and more particularly, to an antenna matching apparatus and method for easily controlling antenna matching in a wireless terminal.

### Description of the Related Art

The designs for antennas and their matching circuitry within wireless terminals are critical for achieving desired wireless terminal performance over a range of operating frequencies, protocols and environmental conditions. Every transceiver device for wireless communication includes an antenna, and if mismatching between the antenna and a transmission circuit occurs, the performance of the transceiver device is deteriorated. To address this antenna mismatching, conventional wireless terminals use a Fixed Matching Network (FMN) scheme using a fixed LC circuit ( L denotes inductor, C denotes capacitor).

The FMN scheme, however, requires considerable time in the wireless terminal development process to arrive at optimal LC circuit device values for matching an antenna. Furthermore, since the LC circuit device values cannot be changed in response to electric field states, Radio Frequency (RF) performance problems frequently occur as the states change under varying user environment. In particular, performance problems in a weak electric field, such as a call drop and mute, are a frequent occurrence.

### SUMMARY OF THE INVENTION

Disclosed is an antenna matching apparatus and method for easily controlling antenna matching in a wireless terminal, for a plurality of operating states and environmental conditions that affect antenna matching.

According to one aspect of the present invention, there is provided an apparatus for matching an antenna in a wireless terminal. The apparatus includes a controller that generates state information corresponding to states of the wireless terminal, and provides the state information to a Field Programmable Gate Array (FPGA) unit. The FPGA unit outputs an optimal Tunable Matching Network (TMN) adjustment value corresponding to the state information. A TMN unit performs antenna matching based on the optimal TMN adjustment value received from the FPGA unit.

According to another aspect, there is provided a method of matching an antenna in a wireless terminal. The method includes providing state information corresponding to states of the wireless terminal to a Field Programmable Gate Array (FPGA) unit; outputting, by the FPGA unit, an optimal Tunable Matching Network (TMN) adjustment value corresponding to the state information of the wireless terminal; and performing antenna matching based on the optimal TMN adjustment value received from the FPGA unit.

### BRIEF DESCRIPTION OF THE DRAWINGS

The above and other objects, features and advantages of the present invention will become more apparent from the following detailed description when taken in conjunction with the accompanying drawing in which:
FIG. 1 is a functional block diagram of a wireless terminal according to an exemplary embodiment;
FIG. 2 is a flowchart illustrating an exemplary antenna matching process that may be performed in the wireless terminal of FIG. 1; and
FIGS. 3A and 3B illustrate an example look up table that may be stored in memory within the exemplary wireless terminal.

### DETAILED DESCRIPTION OF EXEMPLARY EMBODIMENTS

Exemplary embodiments of the present invention will be described herein below with reference to the accompanying drawings. Like reference numbers are used to refer to like elements through the drawings.

The terms and words used in the following description and claims are not limited to the bibliographical meanings; they are merely used herein to enable a clear and consistent understanding of the invention.

It is to be understood that the singular forms "a," "an," and "the" are intended to encompass the plural forms unless the context clearly dictates otherwise. Thus, for example, reference to "an" embodiment or "a" particular element or feature includes reference to one or more embodiments, elements or features, respectively.

Embodiments of the present invention avoid the shortcomings of the FMN scheme described above by implementing an efficient Tunable Matching Network (TMN) scheme. The TMN scheme uses a variable LC circuit instead of the fixed LC circuit and may improve the RF performance in various electric field states without any antenna change. This is achieved by matching the antenna with optimal LC circuit device values depending on the electric field states and a user environment.

Preferably, embodiments of the invention implement the TMN scheme with a hardware based approach using a Field Programmable Gate Array (FPGA). The FPGA approach has distinct advantages over a software based solution, as will become apparent below.

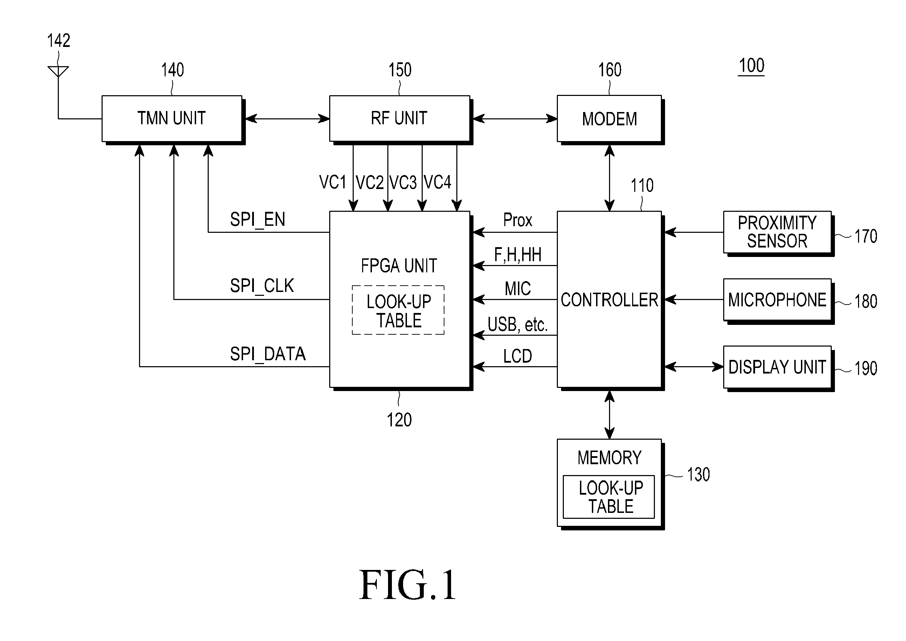

FIG. 1 is a functional block diagram of a wireless terminal, 100, according to an embodiment of the present invention. A Radio Frequency (RF) unit 150 performs a wireless communication function of wireless terminal 100. The RF unit 150 includes an RF transmitter for up-converting a frequency of a transmission signal and amplifying the up-converted transmission signal and an RF receiver for low-noise amplifying a reception signal and down-converting a frequency of the amplified reception signal.

The RF unit 150 transmits, in the exemplary embodiment, General Purpose Input/Output (GPIO) comprising four voltage signals VC 1, VC2, VC3, and VC4 representing band information to a Field Programmable Gate Array (FPGA) unit 120 under control of a controller 110. Each GPIO signal is provided as a "high" or "low" value, such that the combination of the four signal values is a code representing the frequency band and/or protocol with which the RF unit is currently transmitting and/or receiving. It is noted that more or fewer than four GPIO signals can be employed in alternative implementations.

A modem 160 includes a transmitter for coding and modulating the transmission signal and a receiver for demodulating and decoding the reception signal.

A memory 130 may include a program memory and a data memory. The program memory may store programs for controlling a general operation of the wireless terminal and programs for controlling antenna matching using a hardware approach by means of the FPGA unit 120 according to an embodiment. The data memory temporarily stores data generated while the programs are being executed.

The TMN unit 140 includes a variable LC circuit (not shown) to provide a desired impedance designed for the antenna matching on a path between antenna 142 and the RF unit 150. The TMN unit 140 performs the antenna matching with the optimal TMN adjustment value output from the FPGA unit 120, according to an embodiment of the present invention. That is, the TMN unit 140 performs the antenna matching with LC circuit device values corresponding to an optimal TMN adjustment value output from the output end of the FPGA unit 120. The variable LC circuit within TMN unit 140 can be embodied with an inductor connected in a series path, a plurality of capacitors each connected in parallel paths, and a plurality of corresponding switch elements in the parallel paths. The switches can be digitally controlled to effectively switch individual capacitors in and out of a current circuit configuration. As the capacitors are thereby added or removed from the current circuit configuration, the impedance of the overall LC circuit is changed to a value designed to optimally match the antenna as a function of the current environment. Other LC circuit arrangements to achieve the variable impedance are also possible.

In an embodiment, the memory 130 stores a look-up table in which various state information of the wireless terminal, and optimal Tunable Matching Network (TMN) adjustment values corresponding to the various state information, are stored. The state information (also referred to herein as state conditions) may include environmental conditions as well as operating conditions and modes. Each state condition may, either alone or in combination with another state condition(s), affect the electric fields in the vicinity of antenna 142. As these electric fields are disturbed, antenna 142 can be optimally matched to a different impedance, which is adjusted by controlling TMN unit 140.

The display unit 190 displays user data output from the controller 110. The display unit 190 may use a Liquid Crystal Display (LCD). In this case, the display unit 190 may include an LCD controller, a memory for storing image data, and an LCD panel. If the LCD is implemented as part of a touch screen, the display unit 190 may operate as an input unit. In this case, the display unit 190 may display virtual keys to virtually provide a key input unit.

The controller 110 controls the overall operation of the wireless terminal. Controller 110 also controls read/write operations with respect to the look-up table stored in the memory 130, enabling the look-up table contents to be copied to memory of the FPGA unit 120 when the wireless terminal is turned on. In addition, controller 110 controls the state information of the wireless terminal 100 to be received at an input end of the FPGA unit 120.

State signals indicating the state information of the wireless terminal may include the GPIO signals VC1, VC2, VC3, and VC4 of the RF unit 150 that are used for band information. The state signals may further include a microphone signal and an earphone jack signal. For instance, an earphone jack signal may have a first value indicating that an earphone is connected, and a second value indicating that no earphone is connected. A microphone signal may have a first value indicating that microphone 180 is turned on, and a second value indicating a user controlled mute condition wherein microphone 180 is turned off.

The state signals may further include a display unit on/off signal having first and second values indicating that display unit 190 is respectively turned on or shut off. (During operation, to conserve power, the display may automatically shut off or dim after a preset time interval in which no user command is received.) Yet another state signal may be a proximity sensor signal having first and second values indicating whether or not an object is detected by proximity sensor 170 in proximity to the wireless terminal 100, or in proximity to the antenna 142. Still another state signal may be a Universal Serial Bus (USB) connection signal indicating whether a USB connection is currently made between wireless terminal 100 and another device.

In an exemplary embodiment, the FPGA unit 120 is configured to receive state signals at its input end, where the state signals indicate the state information of the wireless terminal. According to the combination of the state signals, optimal TMN adjustment values corresponding to the state signals are routed from the look up table within FPGA unit 120. These adjustment values are output at an output end of FPGA unit 120 directly to a TMN unit 140 for performing the antenna matching.

Through the output end of the FPGA unit 120, an enable signal SPI_EN indicating interface activation, a clock signal SPI_CLK for transmitting clock information, and a data signal SPI_DATA for transmitting the optimal TMN adjustment value are output. Although information is transmitted to the TMN unit 140 via a Serial Peripheral Interface (SPI) interface in the illustrated embodiment, information may alternatively be transmitted to the TMN unit 140 via an Inter-Integrated Circuit (I²C) or Radio Frequency Front End (RFFE) interface. Thus, antenna matching in accordance with the present invention via control by FPGA unit 120, may be accomplished with a variety of interface types.

It is noted that while wireless terminal 100 is shown with a single TMN unit 140 in this embodiment, alternatively two or more TMN units 140 can be deployed to realize a wider range of impedance values and variation. In this case, the output end of the FPGA unit 120 may include a corresponding number of interfaces for transmitting respective optimal TMN adjustment values to the at least two TMN units.

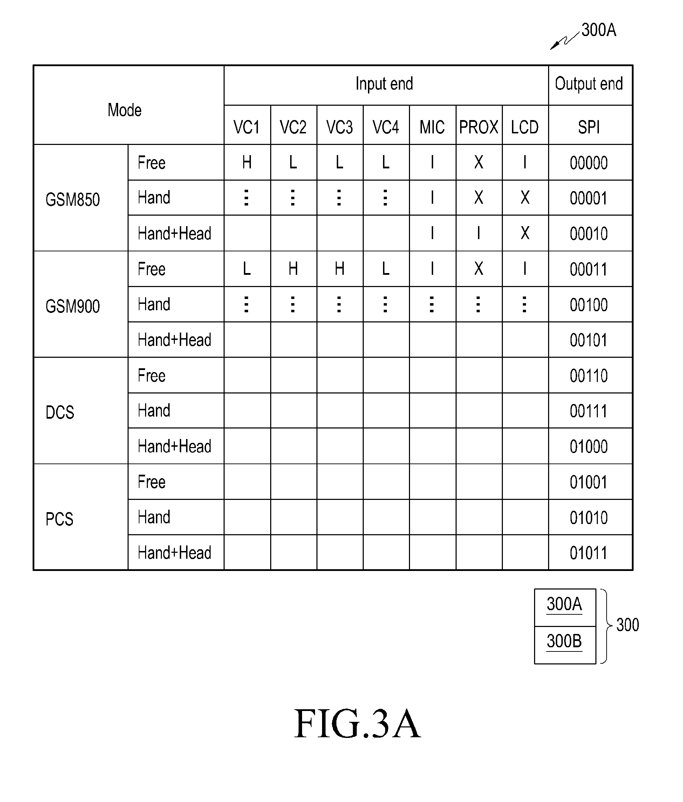

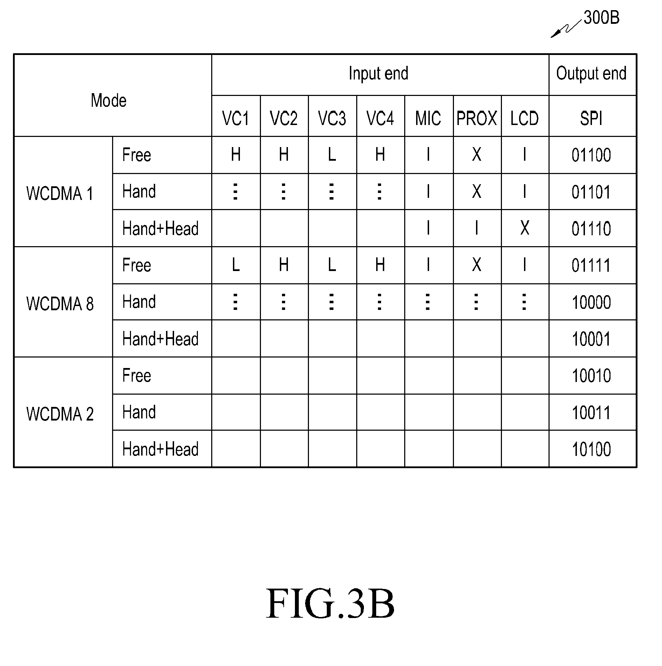

FIGS. 3A and 3B together illustrate an example look up table, 300, that may be pre-stored in memory 130 and copied to FPGA unit 120 within wireless terminal 100. Look- up table 300 provides an output code value in column "SPI" of the "Output end" as a function of operating conditions and modes and environmental conditions. The output code SPI signifies a specific impedance value for TMN Unit 140 represented as a control code that is output to TMN Unit 140 as SPI_DATA. TMN Unit 140 adjusts its LC circuit configuration and thereby, its impedance, as a function of SPI_DATA applied thereto, to achieve optimal antenna matching. Optimum impedance values of TMN Unit 140 corresponding to SPI_DATA are determined beforehand through empirical impedance / near field measurements and/or calculations for each set of conditions. That is, an optimum LC circuit configuration within TMN unit 140 is determined beforehand for each set of conditions in the rows of look-up table 300; the optimum LC configuration for each condition corresponds to the particular code in column SPI.

In look-up table 300, the modes (i.e., states) denoted by GSM850, GSM900, DCS, PCS, WCDMA1, WCDMA8, and WCDMA2 indicate operation at different service network bands / protocols. The different bands / protocols can be represented during operation directly to FPGA unit 120 by the combination of VC1, VC2, VC3 and VC4 (where H denotes a "high" voltage signal and L denotes a "low" voltage signal).

"Free", "Hand", and "Hand+Head" in each service network indicate call modes including call mode information. "Free" indicates that the wireless terminal is located at a position/place in which the body of the user, or an external object, does not influence, or only minimally influences, the electric field in the vicinity of the antenna. 'Hand' indicates that the wireless terminal is located in a hand of the user, and 'Hand+Head' indicates that the wireless terminal is located at a head of the user (and also in the user's hand). A condition of "Hand" can be assumed for any wireless terminal mode involving exclusively a hand operation, such as texting, surfing the Internet, or during a voice call with speaker phone on. The "Hand + Head" condition can be assumed during operation of a voice call without speaker phone.

"Input end" in look-up table 300 includes state signals indicating state information of the wireless terminal received at one input end of the FPGA unit 120 under control of the controller 110, wherein VC1, VC2, VC3, and VC4 denote the GPIO signals of the RF unit 150 for band information described earlier. Although the look-up table shows an example that only the band information is received as "Input end" through the GPIO signals VC1, VC2, VC3, and VC4 of the RF unit 150, all channels in corresponding bands of service networks may be classified and received as Input end. That is, more than four voltage signals may be used to represent bands of service.

"MIC" denotes a microphone signal indicating use/non-use of a microphone 180, wherein "X" indicates non-use of the microphone 180 and "1" indicates use of the microphone 180. "PROX" denotes a proximity sensor signal indicating sensing/non-sensing of an object by a proximity sensor 170, wherein "X" indicates non-sensing of the proximity sensor 170 and "1" indicates sensing of the proximity sensor 170. 'LCD' denotes a display unit on/off signal indicating ON/OFF of a display unit 190, wherein "X" indicates OFF of the display unit 190 and "1" indicates ON of the display unit 190.

"For example, if the MIC signal and the PROX signal are not received, and 'LCD' denotes a display unit off, the controller can detect that the wireless terminal is currently Free mode. And, if the MIC signal and the PROX signal are not received, and 'LCD' denotes a display unit on, the controller can detect that the wireless terminal is currently Hand mode. In addition, if the MIC signal and the PROX signal are received, and 'LCD' denotes a display unit off, the controller can detect that the wireless terminal is currently Hand_Head mode.

Although the example look-up table of FIGS. 3A and 3B lists state signal examples of VC1, VC2, VC3, VC4, MIC, PROX, and LCD as types of 'Input end' signals, the look-up table may further include other state information inputs such as an earphone jack signal indicating use/non-use of an earphone jack and a USB connection signal indicating USB connection information.

"Output end" in look-up table 300 contains the SPI_Data values discussed above, which represent optimal TMN adjustment values corresponding to the state information of the wireless terminal. Although the look-up table shows an example of 'Output end' having only one output value (optimal TMN adjustment value), if the wireless terminal includes at least two TMN units, 'Output end' in the look-up table may also have at least two output values (optimal TMN adjustment values).

As described above, in the present invention, by using the FPGA unit 120 that is a type of programmable logic chip, the input end of the FPGA unit 120 at which state information of the wireless terminal is received and the output end of the FPGA unit 120 through which an optimal TMN adjustment value corresponding to the state information of the wireless terminal is output, may be as freely modified and designed as the user desires.

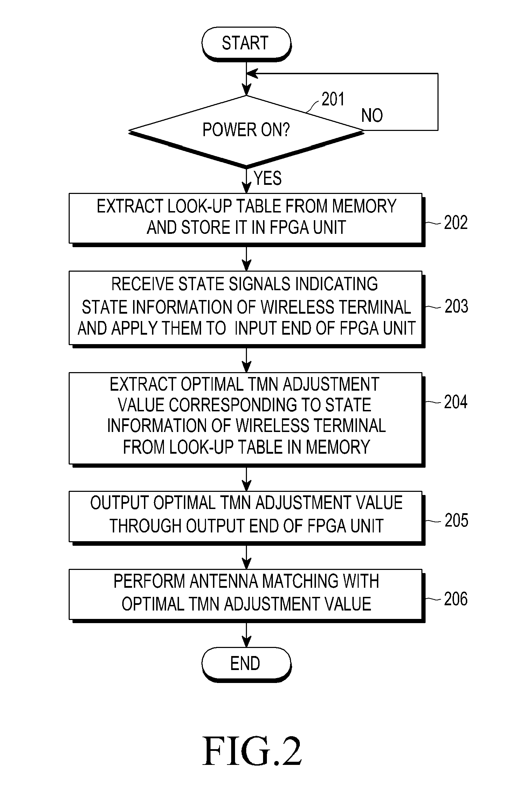

FIG. 2 is a flowchart illustrating an antenna matching process that may be performed in the wireless terminal 100 of FIG. 1 according to an embodiment of the present invention. The process may use the example look-up table of FIGS. 3A and 3B.

When the wireless terminal is turned on, the controller 110 senses this condition in step 201. In step 202, controller 110 controls an operation of accessing a look-up table that was pre-stored in memory 130 and copying the look-up table to memory within FPGA unit 120. The copying of the look up table to FPGA unit 120 may be done through an SPI or External Bus Interface (EBI) bus.

In step 203, the controller 110 searches for a type of a current service network of the wireless terminal and controls values of the GPIO signals VC1, VC2, VC3, and VC4 of the RF unit 150 to be received at the input end of the FPGA unit 120 as state signals. This is done to input band information used by the wireless terminal in the current service network to the input end of the FPGA unit 120. (Alternatively, controller 110 can input signals equivalent to VC1 - VC4 directly to FPGA Unit 120.)

At step 203, the controller 110 controls values of the microphone signal, the LCD on/off signal, the proximity sensor signal for the call mode information to be received at the input end of the FPGA unit 120 as the state signals. Controller 110 may also provide signal values to FPGA unit 120 for the Free, Hand or Hand+Head condition (F, H, or HH as shown in FIG. 1) and for a USB condition and/or earphone condition.

When the state signals indicating state information of the wireless terminal are received at the input end of the FPGA unit 120 in step 203, the FPGA unit 120 extracts an optimal TMN adjustment value corresponding to the received state signals as an output value based on the look-up table stored in the FPGA unit 120 in step 204.

In step 205, the FPGA unit 120 outputs the optimal TMN adjustment value through the output end (SPI_EN, SPI_CLK, and SPI_DATA) of the FPGA unit 120.

When the TMN unit 140 receives the optimal TMN adjustment value through the output end of the FPGA unit 120, the controller 110 controls the TMN unit 140 to perform the antenna matching with LC circuit device values corresponding to the optimal TMN adjustment value in step 206.

As is apparent from the foregoing description, the antenna matching apparatus and method proposed by the present invention may more easily control antenna matching of the wireless terminal, and may control the TMN unit for performing the antenna matching, regardless of interface types.

The above exemplary embodiments have been described in the context of a wireless terminal employing an FPGA to provide control signals directly to a TMN unit to achieve antenna matching under varying environmental conditions. Although a pure software approach using the SPI or I²C interface may be used to control a TMN unit, the FPGA implementation is preferred. In the case of software control, a software support of a vendor corresponding to a model of the RF unit or the controller included in a wireless terminal is required to improve the performance. Further, if an interface to control the TMN unit does not satisfy the model of the RF unit or the controller, the TMN unit cannot be software controlled. These potential problems are avoided by deploying an FPGA as described in the exemplary embodiments hereinabove.

The above-described methods implemented via controller 100 accord ing to the present invention can be implemented in hardware, firmware or as software or computer code that can be stored in a recording medium su ch as a CD ROM, an RAM, a floppy disk, a hard disk, or a magneto-opt ical disk or computer code downloaded over a network originally stored o n a remote recording medium or a non-transitory machine readable mediu m and to be stored on a local recording medium, so that the methods des cribed herein can be rendered in such software that is stored on the record ing medium using a general purpose computer, or a special processor or in programmable or dedicated hardware, such as an ASIC or FPGA. As wo uld be understood in the art, the computer, the processor, microprocessor c ontroller or the programmable hardware include memory components, e.g., RAM, ROM, Flash, etc. that may store or receive software or computer c ode that when accessed and executed by the computer, processor or hardw are implement the processing methods described herein. In addition, it wou Id be recognized that when a general purpose computer accesses code for implementing the processing shown herein, the execution of the code transf orms the general purpose computer into a special purpose computer for ex ecuting the processing shown herein.

While the invention has been shown and described with reference to certain exemplary embodiments, such as a wireless terminal, thereof, it will be understood by those skilled in the art that various changes in form and details may be made therein without departing from the spirit and scope of the invention as defined by the appended claims and their equivalents.

## Claims

1. An apparatus (110, 120, 150) for matching an antenna (142) in a wireless terminal (100), comprising:
a controller (110) generating state information of the wireless terminal corresponding to operating states thereof;
a Field Programmable Gate Array (FPGA) unit (120) connected to receive the state information output by the controller and to output an optimal Tunable Matching Network (TMN) adjustment value (SPI_DATA) corresponding to the state information of the wireless terminal; and
a TMN unit (140) configured to perform antenna matching based on the optimal TMN adjustment value received from the FPGA unit.

2. The apparatus of claim 1, further comprising a memory (130) for storing a look-up table (300) in which the state information of the wireless terminal and the optimal TMN adjustment value corresponding to the state information of the wireless terminal are stored.

3. The apparatus of claim 1, wherein the controller controls copying of the look-up table stored in the memory to the FPGA unit when the wireless terminal is turned on.

4. The apparatus of claim 1,
wherein the controller controls General Purpose Input/Output (GPIO) signals of a Radio Frequency (RF) unit for band information, and a microphone signal, a display unit on/off signal, and a proximity sensor signal for call mode information to be received at an input end of the FPGA unit as the state information of the wireless terminal.

5. The apparatus of claim 1, wherein the FPGA unit comprises an input end for receiving the state information of the wireless terminal and an output end for outputting the optimal TMN adjustment value corresponding to the state information of the wireless terminal.

6. The apparatus of claim 1, wherein, when the wireless terminal is turned on, the FPGA unit receives and stores the look-up table stored in the memory, receives the state information of the wireless terminal through the input end of the FPGA unit, extracts an optimal TMN adjustment value corresponding to the state information of the wireless terminal based on the look-up table, and outputs the extracted optimal TMN adjustment value through the output end of the FPGA unit.

7. A method (201, 202, 203, 204, 205, 206) of matching an antenna in a wireless terminal, comprising:
providing (203) state information corresponding to states of the wireless terminal, to a Field Programmable Gate Array (FPGA) unit (120);
outputting (205), by the FPGA unit, an optimal Tunable Matching Network (TMN) adjustment value (SPI_DATA) corresponding to the state information of the wireless terminal; and
performing antenna matching (206) based on the optimal TMN adjustment value received from the FPGA unit.

8. The method of claim 7, further comprising copying a look-up table pre-stored in a memory (130) of the wireless terminal, to a memory of the FPGA unit when the wireless terminal is turned on.

9. The method of claim 8, wherein the look-up table stores the state information of the wireless terminal and the optimal TMN adjustment value corresponding to the state information of the wireless terminal.

10. The method of claim 7, wherein the providing of the state information of the wireless terminal comprises inputting General Purpose Input/Output (GPIO) signals of a Radio Frequency (RF) unit for band information, a microphone on/off signal, a display unit on/off signal, and a proximity sensor signal for call mode information, to an input end of the FPGA unit as the state information.

11. The method of claim 7, wherein the outputting of the optimal TMN adjustment value comprises:
when the wireless terminal is turned on, extracting an optimal TMN adjustment value corresponding to the state information of the wireless terminal based on the look-up table; and
outputting the extracted optimal TMN adjustment value through an output end of the FPGA unit.
